# EUROPEAN PATENT SPECIFICATION

(11) **EP 3 167 780 B1**
(45) Date of publication and mention of the grant of the patent: **02.01.2019**
(21) Application number: 16198138.6
(22) Date of filing: 10.11.2016
(51) Int. Cl.: A47J 37/12

(54) **DEEP FRYER**
FRITTEUSE
FRITEUSE

(30) Priority: 12.11.2015 IT UB20155539
(43) Date of publication of application: 17.05.2017
(73) Proprietor: De' Longhi Appliances S.r.l. Con Unico Socio, 31100 Treviso (IT)
(72) Inventor: De' Longhi, Giuseppe, 31100 Treviso (TV) (IT); Favaretto, Alessandro, 30031 Dolo (VE) (IT)
(74) Representative: Petraz, Gilberto Luigi

(56) References cited:
- EP-A1- 1 428 464
- FR-A1- 2 895 223
- GB-A- 2 437 914

## Description

### FIELD OF THE INVENTION

The present invention concerns an apparatus for cooking food, by way of non-restrictive example, for cooking food by immersing it in a cooking liquid.

In particular, embodiments described here concern deep fryers and particularly, but not exclusively, electric deep fryers.

### BACKGROUND OF THE INVENTION

It is known that there are compact deep fryers on the market, for example electric, used for cooking food by immersion and other.

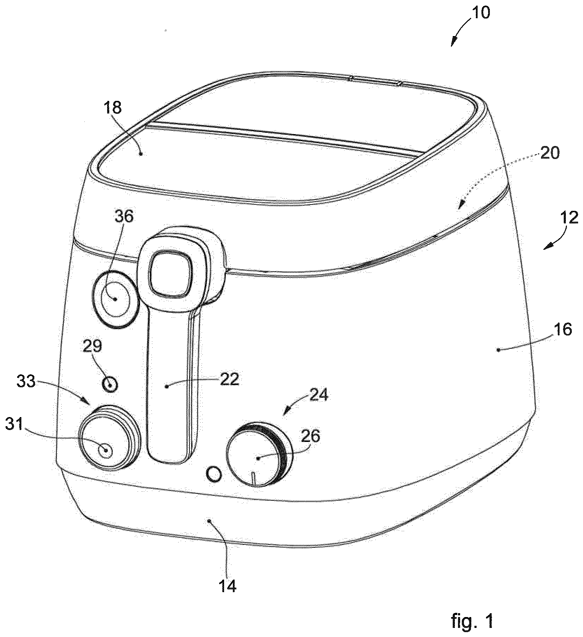

Document GB-A-2 437 914 discloses a deep fryer comprising a containing body defining its structure, a removable tank 3 to contain cooking liquid, a heating unit that comprises a heating element 31, a thermostat 14 and a connector 13, whereby said containing body comprises a base 1 and a perimeter band 2 which can be selectively connected/disconnected with respect to each other (see Fig. 1), wherein said thermostat and said connector are associated to the base.

Usually, this type of deep fryer comprises a hollow containing body used to support and protect the elements that make up the deep fryer.

The containing body of deep fryers is commonly made of plastic materials, for reasons of lightness and to contain costs, and normally also has a lid.

Known immersion deep fryers include a tank configured to contain the cooking liquid, which is coupled at the top with the containing body and which is inserted inside it, occupying and defining approximately a volume which is normally very close to the volume of the compartment in the containing body.

Moreover, immersion deep fryers comprise a removable basket, which is inserted into the tank and in which the food is inserted; the basket is used to remove the food when it is cooked.

Known deep fryers also comprise heating elements configured to raise the temperature of the cooking liquid, in a controlled and desired way.

It is known that the heating elements are arranged in association with the tank, in a position such that they are not accessible to the users. The tank can be removable, to facilitate filling it with oil or emptying the oil used for cooking.

Heat adjustment elements are also associated with known deep fryers, to set the temperature in a desired manner at which the cooking liquid present in the tank is kept, and control and safety elements to control and manage the temperature.

Deep fryers are known in which the containing body is made in a single piece, and the disadvantage of this becomes clear when they are assembled and in the event of maintenance, since the walls of the containing body constitute an impediment to the operations to attach and adjust the components of the control and safety elements.

Moreover, in such deep fryers with a single containing body, making the corresponding mold and the connected operations to make the body and its removal from the mold are complex and very expensive.

Deep fryers are also known in which the containing body is made of a plurality of pieces, such as three, four or more, for example.

Such deep fryers are less stable, are complicated and equally very expensive to make due to the large number of different pieces to be made and assembled.

Furthermore, due to the plurality of components that make up the containing body, it takes a long time to install the heating, control and safety apparatuses, so that the maintenance and adjustment operations also become problematic.

Another disadvantage is the fragility of a containing body consisting of a plurality of pieces.

To this we must add that the join lines can easily be deposited with dirt.

Moreover the horizontal positioning of the sensors in the zone of the base facilitates its getting dirty if there is a dripping of cooking liquid from the tank, or if possible residues drop, compromising the movement thereof or direct contact with the bottom of the tank.

There is therefore a need to perfect a deep fryer that can overcome at least one of the disadvantages of the state of the art.

In particular, one purpose of the present invention is to obtain a containing body for a deep fryer by assembling only two components, thus facilitating the production, assembly and maintenance thereof.

Another purpose of the present invention is to obtain a deep fryer in which it is possible to apply the control and safety components in the preferential position quickly and simply, and at the same time making any control, maintenance and adjustment operation quick, safe and efficient.

An additional purpose is to obtain a deep fryer that allows to simplify and/or improve the connections between its components.

Another purpose is to obtain a deep fryer that has a solid and stable structure.

Furthermore, another purpose of the present invention is to obtain a deep fryer which is compact, as small as possible and therefore not bulky.

Another purpose of the present invention is to obtain a deep fryer that allows to reduce the costs of its production.

Another purpose of the present invention is to obtain a deep fryer that can benefit from the intervention of designers to obtain an appealing esthetic and which, at the same time, is simple to clean.

Another purpose of the present invention is to obtain a deep fryer that is safe for users and reliable, guaranteeing a long working life.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a deep fryer is provided, with or without a lid, which comprises a containing body that acts as the bearing structure, and a removable tank with a heating element integrated, to contain the cooking liquid, with which at least one heating unit is associated.

In accordance with one aspect of the present invention, the containing body comprises a base and a perimeter band.

In accordance with variant embodiments of the invention, the base and/or the perimeter band comprise connection elements configured to facilitate the association and/or coupling of the base to the perimeter band and vice versa, so as to speed up assembly and disassembly for maintenance purposes.

Having only two single components at disposal to obtain the containing body, it is therefore possible to install, on one or on both, the components needed to have a safe deep fryer, with the temperature of the cooking liquid adjustable and controllable.

According to a variant, electric components are applied in the perimeter band to control, manage and command the temperature of the cooking liquid in the tank in a substantially vertical position.

In this way it is convenient to install, verify and maintain the components of the deep fryer directly associated therewith. Moreover, with all the sensors located in a peripheral position and oriented in a substantially vertical manner, the sensors are protected from dripping of liquid or depositing of dirt once the tank has been removed from the deep fryer.

According to another variant, electric components for both the connection of the heating element and connection to the external power source are applied in the base. In the same way the base makes the installation, verification and maintenance of the components associated therewith convenient.

According to other variants, the electric power components and the control components of the heating element are located in the base.

According to another variant, the temperature detector of the tank can be located in the perimeter band, that is, in the base.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of a deep fryer in accordance with embodiments described here;
- fig. 2 is a partly exploded perspective view of the containing body of the deep fryer in fig. 1;
- fig. 3 is a partly sectioned perspective view of one part of the deep fryer in fig. 1;
- fig. 4 is a partly sectioned and exploded perspective view of a lid for a deep fryer in accordance with embodiments described here.

To facilitate comprehension, the same reference numbers have been used, where possible, to identify identical common elements in the drawings.

### DETAILED DESCRIPTION OF SOME EMBODIMENTS

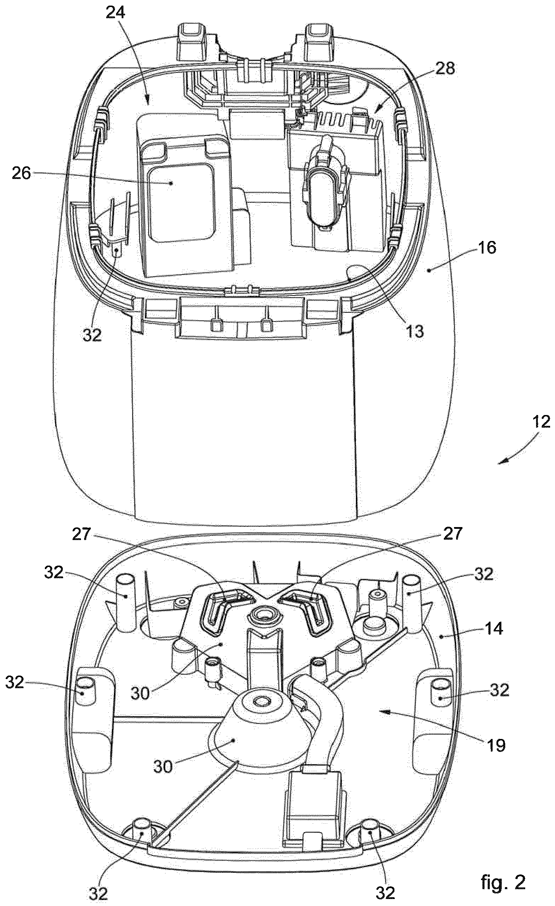

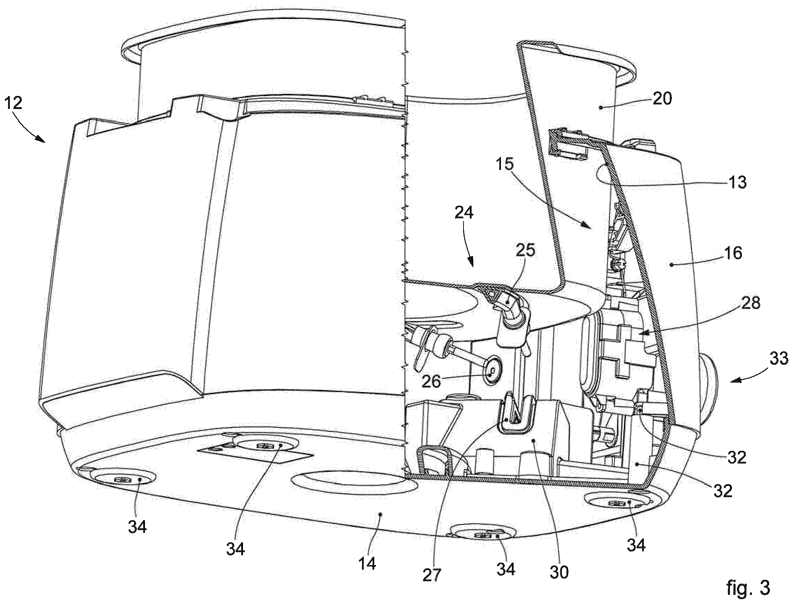

Figs. 1-3 are used to describe example embodiments of a deep fryer 10 to cook food in a cooking liquid, such as oil for example.

The deep fryer 10 comprises at least a containing body 12, a possible lid 18 and at least a tank 20, selectively removable and suitable to contain the desired amount of cooking liquid.

According to the invention, the containing body 12 consists of a base 14 and a perimeter band 16, the whole making up a compartment 13 and the two components being associated by means of connection elements 32.

In the example shown, the deep fryer 10 comprises at least an electric power unit 19 in the base 14. A heating unit 24 is selectively associated with the electric power unit 19, solid with the tank 20, to bring the cooking liquid contained in the tank 20 to the correct temperature.

The containing body 12 contains the tank 20, which is extractable, in the compartment 13.

Moreover, the base 14 comprises by way of example at least one guide element 30 configured to support and guide the electric connections and center the tank 20 correctly to allow the correct coupling of the electric terminals.

The base 14 is configured to support the deep fryer 10 and to give it solidity.

Support feet 34 can be associated with the base 14, disposed below it, which can be adjustable in height to compensate possible irregularities of the support plane.

The base 14 can be easily and rapidly selectively connected/disconnected to/from the perimeter band 16.

The joining of the base 14 with the perimeter band 16 can give the containing body 12 the semblance of a single body.

The heating unit 24 comprises at least one electrically powered heating element 25.

In addition, the heating unit 24 can comprise at least a heat adjustment element, or thermostat 26, and at least a connector 27, moreover one or more probes or external temperature detectors can be provided.

According to one aspect of the present invention, the thermostat 26 is associated with the perimeter band 16.

In accordance with variant embodiments, the heating element 25 can be associated or associable with the tank 20.

Moreover, the heating element 25 can be directly integrated in the tank 20.

In accordance with possible variant embodiments, it can be provided that the heating element 25 can be activated only after the correct insertion of the tank 20 inside the containing body 12.

The at least one connector 27 can be provided to close the electric circuit which can be made between a common electric feed and the heating element 25.

In accordance with variant embodiments, connectors 27 can be provided associated with the guide element 30 and/or the base 14 and/or the perimeter band 16 for example.

In addition, the deep fryer 10 can comprise at least one control and safety element 28 configured to activate if there is a malfunction of the heating unit 24.

In addition, a signaler 29 of the acoustic and/or optical type can be associated with the control and safety element 28 to activate when the cooking liquid reaches the temperature set by the user and alerts the user that it is time to insert the food into the deep fryer 10 to begin cooking. Moreover, the deep fryer 10 can comprise a timer 33 that can be set to define the cooking time of the food in a desired manner.

In accordance with variant embodiments, both the thermostat 26 and the control and safety element 28 are associated with the perimeter band 16.

In accordance with variant embodiments, the control and safety element 28 can also be a thermal fuse configured to open the electric circuit of the heating unit 24.

The control and safety element 28 can be of the disposable type, or the reusable type.

In accordance with variant embodiments, the control and safety element 28 can be preferentially restored only by the intervention of the operator.

The control and safety element 28 can comprise an indicator 31, a warning light for example, to signal a malfunction in the heating unit 24.

According to the invention, the thermostat 26 and the control and safety element 28 are attached to the perimeter band 16, while the at least one connector 27 is attached to the base 14, and the perimeter band 16 is subsequently associated with the base 14 to create the containing body 12 of the deep fryer 10.

Therefore, in accordance with a variant of the present invention, electrical components to control, manage and command the temperature of the deep fryer 10 are associated with the perimeter band 16, while the connection components of the heating element 25 and the connection to an energy source are associated with the base 14.

The deep fryer 10 can include a handle 22.

Moreover the deep fryer 10 can comprise a button 36 connected to the lid 18 and configured to simplify its opening.

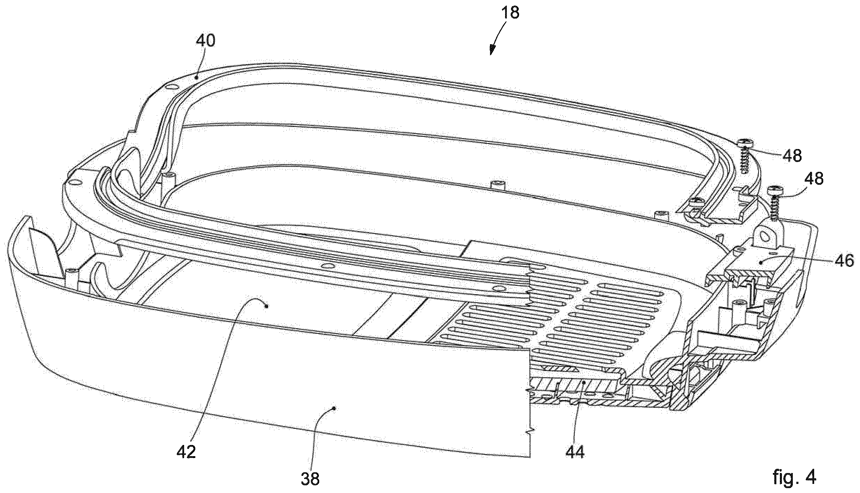

In accordance with variant embodiments described using fig. 4, the lid 18 can comprise a casing 38 and an associable cover element 40 that defines the structure thereof

The casing 38 can comprise a window 42 to inspect the inside of the deep fryer 10 even with the lid 18 closed.

In accordance with variant embodiments, the window 42 can be integrated in the casing 38 in a non-removable manner.

By way of example, the casing 38 can be made of plastic materials and the window 42 made of glass.

The window 42 can be enclosed in the casing 38 to facilitate cleaning. The lid 18 can be provided to come into contact with the cooking liquid and in this embodiment, the cleaning of the lid 18 is simple and practical.

Moreover, the casing 38 can include a filter 44 configured to allow the steam that can be generated in the tank 20 to exit from the deep fryer 10 even when the lid 18 is closed.

A hinge 46 is associated with the lid 18 so it can open and close.

The hinge 46 and the lid 18 can be made as two separate bodies, which can be coupled by means of attachment elements 48.

It is clear that modifications and/or additions of parts may be made to the deep fryer 10 as described heretofore, without departing from the field and scope of the present invention.

It is also clear that, although the present invention has been described with reference to some specific examples, a person of skill in the art shall certainly be able to achieve many other equivalent forms of deep fryer 10, having the characteristics as set forth in the claims and hence all coming within the field of protection defined thereby.

## Claims

1. Deep fryer comprising at least one containing body (12) defining its structure, at least one removable tank (20) to contain cooking liquid, at least one heating unit (24) that comprises at least one heating element (25), at least one thermostat (26) and at least one connector (27), **characterized in that** said containing body (12) comprises a base (14) and a perimeter band (16) which can be selectively connected/disconnected with respect to each other, wherein said thermostat (26) is associated to the perimeter band (16) and said at least one connector (27) is associated to the base (14).

2. Deep fryer as in claim 1, **characterized in that** it comprises at least one control and safety element (28) associated with said perimeter band (16).

3. Deep fryer as in claim 2, **characterized in that** said control and safety element (28) is the disposable type.

4. Deep fryer as in claim 2, **characterized in that** said control and safety element (28) is the reusable type.

5. Deep fryer as in claim 2, 3 or 4 **characterized in that** said control and safety element (28) cannot be automatically restored without the intervention of an operator.

6. Deep fryer as in any claim hereinbefore, **characterized in that** said base (14) comprises at least one guide element (30).

7. Deep fryer as in any claim hereinbefore, **characterized in that** the insertion of the tank (20) activates said heating unit (24).

8. Deep fryer as in any claim hereinbefore, **characterized in that** said heating element (25) is associated with said tank (20).

9. Deep fryer as in any claim hereinbefore, **characterized in that** said base (14) and/or said perimeter band (16) comprise lead-ins for coupling.

## Patentansprüche

1. Fritteuse mit wenigstens einem Behälterkörper (12), welcher ihre Struktur definiert, wenigstens einem entfernbaren Tankelement (20), um eine Kochflüssigkeit aufzunehmen, wenigstens einer Heizeinheit (24), welche zumindest ein Heizelement (25) umfasst, wenigstens einem Thermostat (26) und wenigstens einem Verbindungselement (27),
**dadurch gekennzeichnet, dass** der Behälterkörper (12) eine Basis (14) und ein Umfangsband (16) umfasst, welche selektiv miteinander verbunden/ voneinander getrennt werden können, wobei das Thermostat (26) dem Umfangsband (16) zugeordnet ist und das wenigstens eine Verbindungselement (27) der Basis (14) zugeordnet ist.

2. Fritteuse nach Anspruch 1, **dadurch gekennzeichnet, dass** sie wenigstens ein Steuerungs- und Sicherheitselement (28), welches dem Umfangsband (16) zugeordnet ist, umfasst.

3. Fritteuse nach Anspruch 2, **dadurch gekennzeichnet, dass** das Steuerungs- und Sicherheitselement (28) vom Einwegtyp ist.

4. Fritteuse nach Anspruch 2, **dadurch gekennzeichnet, dass** das Steuerungs- und Sicherheitselement (28) wiederverwendbar ist.

5. Fritteuse nach Anspruch 2, 3 oder 4, **dadurch gekennzeichnet, dass** das Steuerungs- und Sicherheitselement (28) nicht ohne Zutun eines Bedieners selbsttätig zurückgesetzt werden kann.

6. Fritteuse nach einem der vorangehenden Ansprüche, **dadurch gekennzeichnet, dass** die Basis (14) wenigstens ein Führungselement (30) umfasst.

7. Fritteuse nach einem der vorangehenden Ansprüche, **dadurch gekennzeichnet, dass** ein Einführen des Tankelements (20) die Heizeinheit (24) aktiviert.

8. Fritteuse nach einem der vorangehenden Ansprüche, **dadurch gekennzeichnet, dass** das Heizelement (25) dem Tankelement (20) zugeordnet ist.

9. Fritteuse nach einem der vorangehenden Ansprüche, **dadurch gekennzeichnet, dass** die Basis (14) und/oder das Umfangsband (16) Einführungen für eine Kopplung umfassen.

## Revendications

1. Friteuse comprenant au moins un corps (12) apte à contenir définissant sa structure, au moins un réservoir amovible (20) pour contenir un liquide de cuisson, au moins une unité de chauffage (24) qui comprend au moins un élément chauffant (25), au moins un thermostat (26) et au moins un connecteur (27), **caractérisé en ce que** ledit corps (12) apte à contenir comprend une base (14) et une bande périphérique (16) qui sont aptes à être connectées / déconnectées l'une par rapport à l'autre, ledit thermostat (26) étant associé à la bande périphérique (16) et ledit au moins un connecteur (27) étant associé à la base (14).

2. Friteuse selon la revendication 1, **caractérisée en ce qu'**elle comprend au moins un élément de commande et de sécurité (28) associé à ladite bande périphérique (16).

3. Friteuse selon la revendication 2, **caractérisée en ce que** ledit élément de commande et de sécurité (28) est du type à usage unique.

4. Friteuse selon la revendication 2, **caractérisée en ce que** ledit élément de commande et de sécurité (28) est du type réutilisable.

5. Friteuse selon la revendication 2, 3 ou 4, **caractérisée en ce que** ledit élément de commande et de sécurité (28) ne peut être restauré automatiquement sans l'intervention d'un opérateur.

6. Friteuse selon l'une quelconque des revendications précédentes, **caractérisée en ce que** ladite base (14) comprend au moins un élément de guidage (30).

7. Friteuse selon l'une quelconque des revendications précédentes, **caractérisée en ce que** l'insertion du réservoir (20) active ladite unité de chauffage (24).

8. Friteuse selon l'une quelconque des revendications précédentes, **caractérisée en ce que** ledit élément chauffant (25) est associé audit réservoir (20).

9. Friteuse selon l'une quelconque des revendications précédentes, **caractérisée en ce que** ladite base (14) et / ou ladite bande périphérique (16) comprennent des entrées pour couplage.
